# EUROPÄISCHE PATENTSCHRIFT

(11) **EP 1 305 996 B1**
(45) Veröffentlichungstag und Bekanntmachung des Hinweises auf die Patenterteilung: **28.02.2007**
(21) Anmeldenummer: 02023250.0
(22) Anmeldetag: 17.10.2002
(51) Int. Cl.: A01D 44/00

(54) **Handgerät zum Entfernen von Fadenalgen aus Teichen, Aquarien, Wassergefässen**
Handheld apparatus for removing algae
Appareil manuel pour enlever les algues

(30) Priorität: 23.10.2001 DE 10152225
(43) Veröffentlichungstag der Anmeldung: 02.05.2003
(73) Patentinhaber: Feinäugle, Albert, 72218 Wildberg (DE)
(72) Erfinder: Feinäugle, Albert, 72218 Wildberg (DE)
(74) Vertreter: Brisch, Georg

(56) Entgegenhaltungen:
- DE-A- 3 607 534
- DE-A- 19 947 736
- DE-U- 9 217 027
- GB-A- 2 328 899
- US-A- 5 330 010

## Beschreibung

Die Erfindung betrifft ein Handgerät zum Entfernen von Fadenalgen aus Teichen, Aquarien und Wassergefäßen gemäß Oberbegriff des Anspruchs 1.

In Gartenteichen, Aquarien und Wasserpflanzenbeeten besteht häufig das Problem dass sich nicht die gewünschte Klarheit des Wassers einstellt. Ursache dafür sind Nährstoffe im Wasser die zu Algenwachstum führen und so eine Trübung des Wassers herbeiführen. Besonders unerwünscht sind langfädige Algen (ca. 10 cm lang, Durchmesser in etwa vergleichbar zu einem menschlichen Haar), die oft noch bei relativ nährstoffarmem und ansonsten algenfreiem und klarem Wasser gedeihen. Diese Algen bilden schwammige Bereiche die durch bläschenartige Einschlüsse äußerst unästhetisch wirken. Eine chemische Bekämpfung ist wegen bekannter Nachteile meist unerwünscht. Es bleibt meist nur die mechanische Bekämpfung durch Einsammeln und Entfernen der Fadenalgen. Dies hat den positiven Nebeneffekt, dass mit den Algen dem Wasser genau die Nährstoffe entzogen werden, die sonst zu erneutem Wachstum aus den Nährstoffen der sterbenden Algen führen. So kann das Wasser nach und nach auf ökologische Weise von unerwünschten Nährstoffen und Algen befreit werden.

Eine unter Aquarianern bekannte Methode zur mechanischen Entfernung von Fadenalgen ist, die Fadenalgen auf einem stabförmigen Gegenstand z. B. ein rundes Holzstäbchen (im folgenden Aufwickelkörper genannt) aufzuwickeln und aus dem Wasser zu entfernen. In der Praxis stellt es sich als schwierig heraus, Aufwickelkörper mit ausreichend hoher Haftung zu finden, die ein sicheres und schnelles Erfassen der Algen ermöglichen und nach Möglichkeit sogar das Ausreißen angewachsener Fadenalgen ermöglichen.

DE 36 07 534 C2 beschreibt einen Trägerkörper zum Aufwickeln von Algen der mit einer Vielzahl von Dornen besetzt ist um die schnelle Aufnahme der Algen zu erleichtern. Das Abstreifen der Algen erfolgt von Hand; Längsrinnen im Trägerkörper erleichtern das Abstreifen mit dem Finger.

Selbst durch diese haftungsverbessernde Maßnahmen (Besetzen mit Dornen o. ä.) kann leider nicht sichergestellt werden dass die Haftung groß genug ist, dass Fadenalgen, die an einem Ende z. B. an einem Kieselstein angewachsen sind, ausgerissen werden können. Meist gelingt dies noch bei älteren Algen; jüngere, vitale Algen widersetzen sich jedoch häufig.

Eine weitere Schwierigkeit besteht darin, den Aufwickelkörper nach erfolgter Algenaufwicklung wieder von den Algen zu befreien, da diese aufgrund ihrer glitschigen Konsistenz sehr schlecht zu fassen und durch die haftungsverbessernden Maßnahmen zusätzlich schlecht zu entfernen sind. Hier ist eine effektive Abstreifvorrichtung gefragt, die sicher und bequem die Algen entfernt und den Aufwickelkörper sehr schnell für den nächsten Einsatz zur Verfügung stellt.

DE 199 47 736 A1 beschreibt einen mechanischen Sammler für Wasserpflanzen und Algen. Als Aufwickelkörper kommt hier ein Stab angepasster Länge, angepassten Durchmessers, angepasster Form und beliebigen Materials oder Materialkombinationen und beliebiger Oberfläche, ausgebildet als Vollmaterial oder röhrenförmig zum Einsatz. Erwähnt wird in dieser Schrift auch eine externe Abstreifhilfe die fest verankert werden kann und mit Hilfe derer die Algen abgestreift werden können. Über geeignete Oberflächen des Stabes zur Erzielung der notwendigen Haftung werden keine Angaben gemacht. Nachteilig bei dieser Lösung ist, dass die erwähnte externe Abstreifhilfe zum Abstreifen der Algen jeweils erst aufgesucht werden muss.

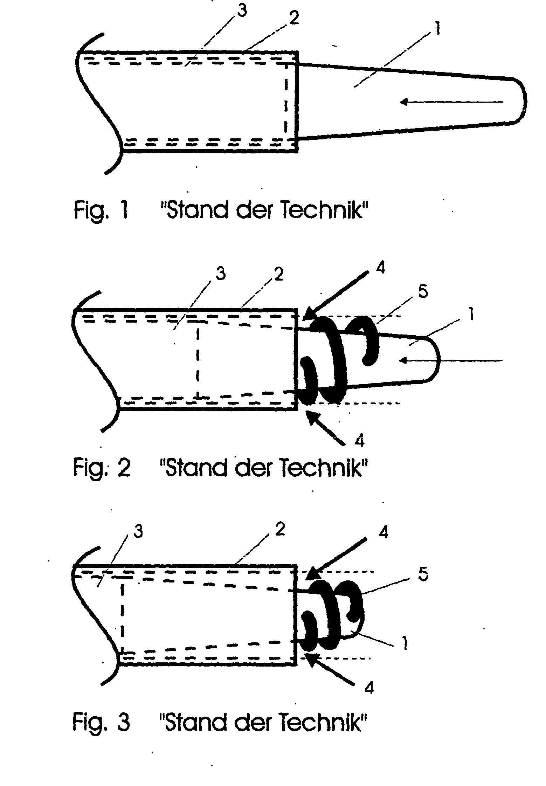

Bekannt ist auch ein Gerät "A weed collecting Device" GB 2 328 899 A (Fig.1). Hier kommt vorteilhaft eine integrierte Abstreifhilfe zur Anwendung. Der Aufwickelkörper besteht aus einem konisch zulaufenden gezahnten Stab (1), der am Ende eines Verlängerungsstabes (3) bzw. -rohres befestigt ist. Die Algen ((5) zeigt ein aufgewickeltes Büschel von Fadenalgen) werden auf den Stab (1) aufgewickelt, aus dem Wasser entfernt und können durch ein handverschiebbares Abstreiferrohr (2) das über den Verlängerungsstab (3) geschoben ist, abgestreift werden (Fig. 2, 3). Nachteilig erscheint bei dieser Lösung, dass durch die konische Ausführung des Aufwickelstabes (1) der Spalt (4) zwischen Abstreiferrohr (2) und Aufwickelstab (1) unterschiedlich groß ist, je nachdem wie weit das Abstreiferrohr (2) über den Aufwickelstab (1) geschoben wird. Bei einem kleinen Spalt (4) (Fig. 2) und gleichzeitig guter Haftung der Algen (5) auf dem Aufwickelstab (1) durch die Zahnung des Stabes besteht die Gefahr dass die Algen, anstatt dass sie abgestreift werden, sich in den Spalt zwischen Abstreiferrohr und Aufwickelstab drücken und dadurch verklemmen (Selbsthemmung). Durch den mechanisch fragilen Aufbau der Fadenalgen werden diese durch den ersten missglückten Abstreifversuch mechanisch zerstört und bilden eine formlose Masse die sich nur noch sehr schwer entfernen lässt. Dieses Problem könnte dadurch gemindert werden dass die Haftung der Algen auf dem Aufwickelstab gemindert wird, was aber wie beschrieben unerwünscht ist. Wird dagegen die Konizität des Aufwickelstabes (1) vergrößert um das Abstreifen zu erleichtern, ist mit Problemen zu rechnen, wenn Algen vorwiegend am Ende des konischen Aufwickelstabs aufgewickelt werden (Fig. 3). Denn dann kann es durchaus sein dass der Spalt (4) (Fig. 3) zwischen Abstreiferrohr (2) und Stab (1) bereits zu groß ist um die Algen überhaupt zu erfassen und abzustreifen.

Aus dem deutschen Gebrauchsmuster DE 92 17 027 U1 ist eine Vorrichtung zum Entfernen von Fadenalgen aus Teichen bekannt. Die bekannte Vorrichtung besteht aus einem Rohr und einer darin drehbar und axial verschiebbaren Achse, an deren einem Ende eine Kurbel und an deren anderem Ende ein Wickelkörper zum Aufwickeln der Algen befestigt ist. Der Wickelkörper ist so ausgebildet, dass er aus einer gespreizten Aufwickelstellung durch axialen Zug an der Kurbel in eine Abstreifstellung bewegbar ist, in der sein Umfang kleiner als in der Aufwickelstellung ist. Durch Festhalten des Rohres mit der einen Hand und Drehen der Kurbel mit der anderen Hand lassen sich Algen aufwickeln, und sie gleiten dann entweder bei Senkrechtstellung des Rohres durch ihr Eigengewicht von dem Aufwickelkörper in ein bereitgestelltes Sammelgefäß, oder sie werden durch Ziehen der Kurbel zum Herabgleiten freigegeben.

Die Schwierigkeit bei allen bekannten Verfahren liegt darin, dass einerseits beim Aufwickeln der Algen eine starke Haftung der Algen an dem Aufwickelkörper erwünscht bzw. notwendig ist. Deshalb wird nach Aufwickelkörper mit maximaler Haftung gesucht. Andererseits behindert eine so erreichte starke Haftung der Algen den Abstreifvorgang oder macht ihn zumindest unsicher, sodass u. U. mehrfach abgestreift werden muss.

Aufgabe der Erfindung ist es daher, ein Handgerät der eingangs geschilderten Art bereitzustellen, das beim Aufwickeln der Algen eine starke Haftung der Algen an dem Aufwickelkörper und andererseits ein einfaches und sicheres Abstreifen der aufgewickelten Algen gewährleistet.

Diese Aufgabe wird durch ein Handgerät gelöst, das die Merkmale des Patentanspruchs 1 aufweist. Besondere Ausführungsarten der Erfindung sind in den Unteransprüchen offenbart.

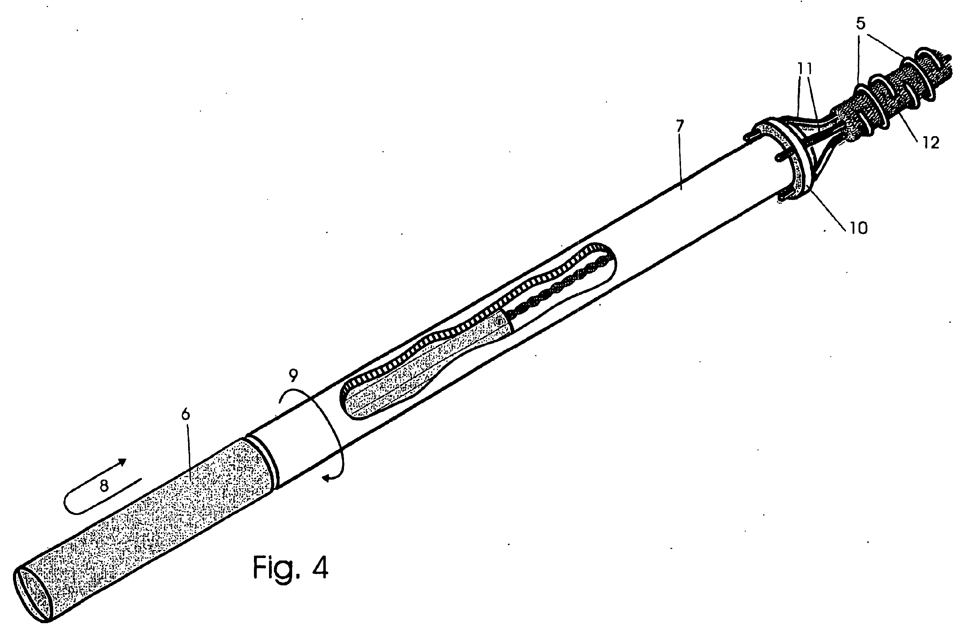

Die Erfindung betrifft ein Handgerät zum Entfernen von Fadenalgen aus Teichen, Wasserpflanzenbeeten und Aquarien, das als wesentliche Neuerung eine integrierte Abstreifvorrichtung enthält, die alle beschriebenen Nachteile bekannter Geräte aufhebt und somit vorteilhaft die Arbeit erleichtert und beschleunigt. Aufgrund der besonderen Konstruktion der Abstreifvorrichtung ist es bei diesem Gerät möglich den Aufwickelkörper auf maximale Haftung der Algen auszulegen und dennoch jederzeit eine absolut sichere Abstreifung der Algen zu erreichen. Die Funktionsweise der Abstreifvorrichtung wird im nächsten Abschnitt erläutert. Das Handgerät als solches ist ein stab- bzw. röhrenförmiges Gerät, das in seiner Größe dem Einsatzzweck angepasst werden kann. Ein Ausführungsbeispiel eines Gesamtgerätes ist in Fig. 4 dargestellt. Das stabförmige Gerät ist so ausgeführt, dass es bequem mit beiden Händen gefasst und um seine Längsachse gedreht werden kann (9). Das aktive Ende (10), (11), (12) (Fig.4), der bedienenden Person abgewandt und ins Wasser ragend, trägt den Aufwickelkörper (12) und die Abstreifvorrichtung (10), (11) deren beispielhafte Ausführungen unten im Detail beschrieben sind. Der Aufwickelkörper (12), im Ausführungsbeispiel eine gedrehte Bürste, erfasst durch die Drehung des gesamten Geräts um seine Längsachse (9) die Fadenalgen ((5) zeigt ein aufgewickeltes Büschel von Fadenalgen) und wickelt sie auf. Angewachsene Algen werden im günstigen Fall sogar ausgerissen. Das aktive Ende des Geräts wird nun über einem Gefäß positioniert. Mit einer einfachen Schiebebewegung (8) "zurück und vor" des Griffes (6) wird die Bürste (12) durch den Abstreifer (10), (11) gezogen, die Algen werden abgestreift (siehe Detailbeschreibung unten) und fallen in das Gefäß. Das von Algen befreite aktive Ende (der Aufwickelkörper (12)) steht für einen neuen Arbeitsgang zur Verfügung.

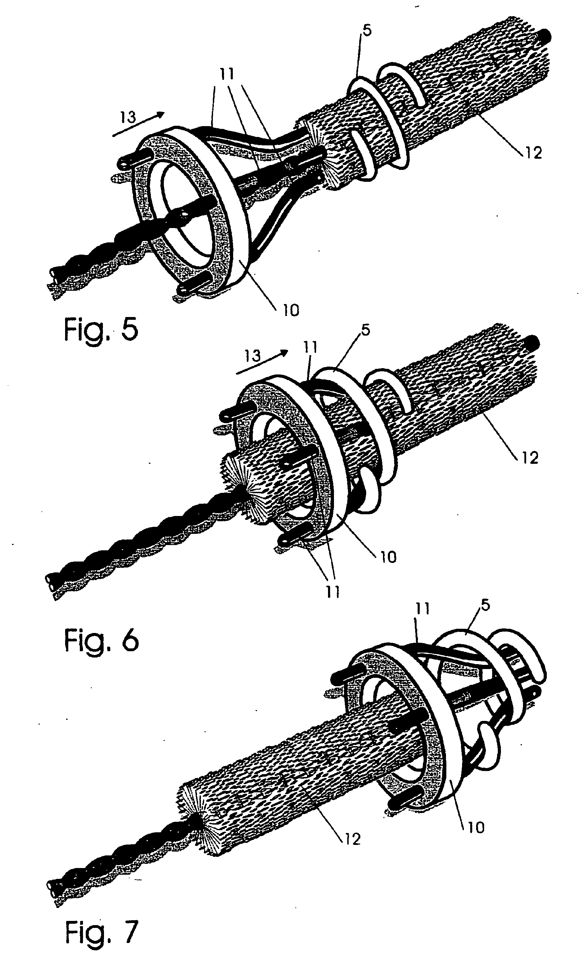

Die grundlegende Neuerung liegt in der Arbeitsweise der Abstreifvorrichtung, genauer gesagt in der Kombination von Aufwickelkörper und Abstreifer und wird anhand eines Ausführungsbeispiels einer Abstreifvorrichtung im folgenden im Detail beschrieben (Fig. 5;6;7). Als Aufwickelkörper (12) wurde hier eine gedrehte handelsübliche Bürste gewählt (Anspruch 6). Der Abstreifer besteht in diesem Beispiel aus gebogenen und an den Spitzen gerundeten Drähten (11) aus einem rostfreien Metall, die in einen zylindrisch ringförmigen Träger (10) eingebettet sind und so eine kammartige konische Anordnung bilden (Anspruch 2). In der Praxis kann eine beliebige Zahl solcher Drähte verwendet werden (z. B. sechs), in der Darstellung sind aus Gründen der Übersichtlichkeit nur vier dargestellt. Der Vorteil einer gedrehten Bürste als Aufwickelkörper liegt darin, dass Algen (5) an der Bürste (12) sehr gut haften und dadurch sehr schnell und sicher aufgenommen werden. Nachteilig ist, dass die Algen (5) sehr schwierig wieder von der Bürste (12) zu entfernen sind. Die Sicherheit mit der Abstreifvorrichtungen nach der vorliegenden Erfindung arbeiten, kommt in diesem Ausführungsbeispiel also besonders deutlich zum Ausdruck. Die grundsätzliche Idee lässt sich jedoch leicht auch in anderen Ausführungen wiedererkennen. Allen denkbaren Ausführungen von Aufwickelkörpern gemeinsam ist, dass sich die Algen beim Aufwickeln in Büscheln in etwa ring- bzw. torus- oder wendelförmig um den Aufwickelkörper legen (5). Ferner gehört zur grundlegenden Idee der Erfindung dass ein sicheres Abstreifen nur dann gelingt, wenn die Haftung der Algen am Aufwickelkörper vor oder während des Abstreifens aufgehoben wird, oder zumindest jegliche Reibung deutlich reduziert wird. Dies ist sicher dann der Fall, wenn die Algen vor oder während des Abstreifens vom Aufwickelkörper abgehoben werden. Die grundlegende Idee der Erfindung sieht demnach einen konisch zulaufenden kammartigen Abstreifer (10), (11) in Kombination mit einem geeigneten Aufwickelkörper (12) vor. Die Kombination Aufwickelkörper/Abstreifer ist stets so gewählt dass der Abstreifer bei der Abstreifbewegung (13) (Fig. 5;6;7) zuerst unter die Algen greift. In der weiteren Abstreifbewegung gleiten die Algen auf den konischen Bereich des Abstreifers (Fig. 6), der Radius mit dem die Algen aufgewickelt sind vergrößert sich, die Algen werden vom Aufwickelkörper abgehoben und können dadurch leicht abgestreift werden. Am Ende der Abstreifbewegung (Fig. 7) genügt die Schwerkraft dass die Algen bei einem abwärtsgeneigten Handgerät in das bereitstehende Auffanggefäß fallen.

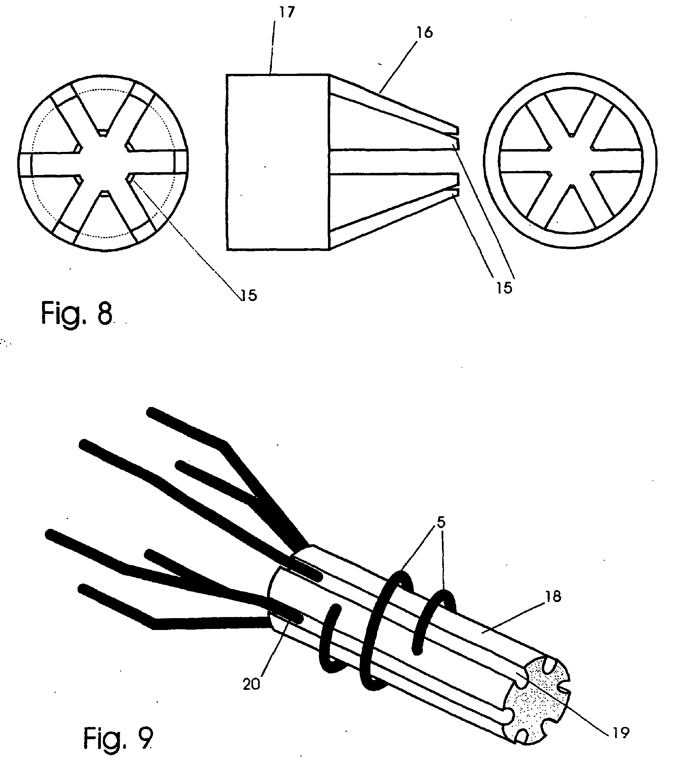

Eine weitere Ausführung eines Abstreifers nach Anspruch 4 zeigt Fig. 8. Es handelt sich hier um einen Körper (17), der durch spanende oder umformende Bearbeitung oder durch gießtechnische Verfahren in unterschiedlichen Materialien kostengünstig für kleine und große Stückzahlen hergestellt werden kann, und mit dem sich ebenfalls der vorteilhafte Ablauf der Abstreifung nach Anspruch 1 ergibt. Der Abstreifer wird am aktiven Ende auf das Trägerrohr (7) des Handgeräts gesteckt und fixiert. Der Radius des Umkreises in dem die Spitzen (15) des Abstreifers angeordnet sind ist kleiner gewählt als der Radius, mit dem sich die Algen um den dazugehörigen Aufwickelkörper legen. Dadurch ist gewährleistet dass die Spitzen des Abstreifers beim Abstreifen zuerst unter die Algen greifen, dann die Algen durch den konischen Teil (16) des Abstreifers in der erwünschten Weise vom Aufwickelkörper abgehoben werden. Diese Ausführung des Abstreifers lässt sich mit unterschiedlichen Ausführungen von Aufwickelkörpern verwenden.

Eine Ausführungsvariante eines Aufwickelkörpers zeigt (18) in (Fig. 9). Diese Variante lässt sich vorteilhaft spanend, umformend oder gießtechnisch in unterschiedlichen Materialien herstellen. Um die Aufnahme der Algen (5) zu erleichtern kann der Aufwickelkörper (18) mit Borsten besetzt werden wie dies von handelsüblichen Haarbürsten bekannt ist (ohne Darstellung). In den Aufwickelkörper sind längs Nuten (19) eingearbeitet in denen die Spitzen (20) des dazu passenden Abstreifers gleiten. Dadurch ist gewährleistet dass der Abstreifer zuerst unter die Algen greifen kann um sie dann im weiteren Verlauf vom Aufwickelkörper zuerst abzuheben und dann abzustreifen (Ablauf nach Anspruch 1).

Wie bereits beschrieben kann selbst durch alle haftungsverbessernde Maßnahmen u. U. nicht sichergestellt werden, dass die Haftung groß genug ist, um angewachsene Fadenalgen auszureißen. Eine weitere vorteilhafte Ausgestaltung des Aufwickelkörpers nach Anspruch 8 sieht demnach die Integration einer oder mehrerer Klingen vor (ohne Darstellung), die angewachsene Algen beim Aufwickeln abrasieren. Als Schutz gegen Verletzungen durch Berühren oder gegen Beschädigungen der Teichfolie können die Klingen durch umgebende stabile Borsten abgeschirmt werden.

## Patentansprüche

1. Handgerät zum mechanischen Entfernen von Fadenalgen und Wasserpflanzen durch Aufwickeln mit einem Aufwickelkörper und einer integrierten Abstreifvorrichtung, **dadurch gekennzeichnet, dass** die Abstreifvorrichtung derart ausgebildet ist, dass sie beim Abstreifen zuerst unter die Algen greift, die Algen dann in der weiteren Abstreifbewegung vom Aufwickelkörper abhebt, um diese so mit verminderter Reibung, vom Aufwickelkörper abzustreifen.

2. Handgerät zum mechanischen Entfernen von Fadenalgen nach Anspruch 1, **dadurch gekennzeichnet, dass** die Abstreifvorrichtung aus gebogenen Drähten oder Stiften (11) beliebiger Zahl und beliebigen Materials besteht, die in einen Träger (10) beliebigen Materials und beliebiger Form eingebettet sind.

3. Handgerät zum mechanischen Entfernen von Fadenalgen nach Anspruch 1, **dadurch gekennzeichnet, dass** die Drähte oder Stifte ohne Verwendung eines Trägers direkt am rohrförmigen Ende des Handgeräts befestigt sind.

4. Handgerät zum mechanischen Entfernen von Fadenalgen nach Anspruch 1, **dadurch gekennzeichnet, dass** die Abstreifvorrichtung aus einem spanend, umformend oder gießtechnisch hergestellten Teil (17) beliebigen Materials besteht.

5. Handgerät zum mechanischen Entfernen von Fadenalgen nach einem der vorhergehenden Ansprüche, **dadurch gekennzeichnet, dass** als Aufwickelkörper eine handelsübliche gedrehte Bürste *(12)* zum Einsatz kommt.

6. Handgerät zum mechanischen Entfernen von Fadenalgen nach einem der Ansprüche 1 bis 4, **dadurch gekennzeichnet, dass** als Aufwickelkörper ein spanend, umformend oder gießtechnisch hergestellter Körper (18) zum Einsatz kommt, dessen längs laufende Nuten es der Abstreifvorrichtung ermöglichen unter die Algen zu greifen und an dessen Oberfläche beliebige haftungsverbessernde Maßnahmen, wie Borstenbesatz, Filzbesatz oder andere, durchgeführt sind.

7. Handgerät zum mechanischen Entfernen von Fadenalgen nach einem der vorhergehenden Ansprüche, **dadurch gekennzeichnet, dass** in den Aufwickelkörper zusätzlich eine oder mehrere Klingen eingesetzt sind, die durch umgebende Borsten, Stacheln oder Zinken geschützt sind, so dass die angewachsenen Fadenalgen, die sich dem Ausreißen widersetzen, beim Aufwickeln zusätzlich abrasierbar sind.

8. Handgerät zum mechanischen Entfernen von Fadenalgen nach einem der vorhergehenden Ansprüche, **dadurch gekennzeichnet, dass** das Handgerät aus einem Rohr (7) besteht, das bequem mit beiden Händen fassbar und um seine Längsachse drehbar ist (9) und die Abstreifung mit einer einfachen Schiebebewegung, zurück und vor (8), eines verschiebbaren Griffes (6) oder einer Griffschale durchführbar ist.

## Claims

1. Manual device for the mechanical removal of filamentous algae and aquatic plants by winding up with a winding body and an integral stripping device, **characterised in that** the stripping device is designed in such a way that, when stripping, it first reaches underneath the algae, then lifts the algae off the winding body in the subsequent stripping movement in order to thus strip this from the winding body with reduced friction.

2. Manual device for the mechanical removal of filamentous algae according to Claim 1, **characterised in that** the stripping device is made of bent wires or pins (11) of any number and any material, which are embedded in a carrier (10) of any material and any shape.

3. Manual device for the mechanical removal of filamentous algae according to Claim 1, **characterised in that** the wires or pins are fixed directly to the tubular end of the manual device without the use of a carrier.

4. Manual device for the mechanical removal of filamentous algae according to Claim 1, **characterised in that** the stripping device is made of a machined, formed or cast part (17) of any material.

5. Manual device for the mechanical removal of filamentous algae according to one of the preceding claims, **characterised in that** a commercially available turned brush (12) is used as the winding body.

6. Manual device for the mechanical removal of filamentous algae according to one of Claims 1 to 4, **characterised in that** a machined, formed or cast body (18) is used as the winding body, the longitudinally running slots of which enable the stripping device to reach underneath the algae, and any desired adhesion-improving measures such as a bristle lining, felt lining or others are implemented on its surface.

7. Manual device for the mechanical removal of filamentous algae according to one of the preceding claims, **characterised in that** one or more blades are additionally incorporated in the winding body, which are protected by surrounding bristles, spines or teeth, so that the accrued filamentous algae, which oppose pulling out, can additionally be shaved off when winding up.

8. Manual device for the mechanical removal of filamentous algae according to one of the preceding claims, **characterised in that** the manual device consists of a tube (7), which can be comfortably gripped with both hands and can be rotated about its longitudinal axis (9), and the stripping can be carried out with a simple sliding movement, backwards and forwards (8), of a sliding handle (6) or of a handle shell.

## Revendications

1. Appareil manuel pour l'élimination mécanique d'algues filaires et de plantes d'eau par enroulement avec un corps d'enroulement et un dispositif racloir intégré, **caractérisé en ce que** le dispositif racloir est réalisé de sorte qu'il prend d'abord prise lors du raclage sous les algues, soulève ensuite les algues du corps d'enroulement dans le mouvement de raclage ultérieur afin de racler ainsi celles-ci du corps d'enroulement avec un frottement réduit.

2. Appareil manuel pour l'élimination mécanique d'algues filaires selon la revendication 1, **caractérisé en ce que** le dispositif racloir se compose de fils métalliques ou de pointes courbé(e)s (11) de nombre quelconque et de matériau quelconque qui sont encastré(e)s dans un support (10) de matériau quelconque et de forme quelconque.

3. Appareil manuel pour l'élimination mécanique d'algues filaires selon la revendication 1, **caractérisé en ce que** les fils métalliques ou pointes sont fixé(e)s sans utilisation d'un support directement sur l'extrémité tubulaire de l'appareil manuel.

4. Appareil manuel pour l'élimination mécanique d'algues filaires selon la revendication 1, **caractérisé en ce que** le dispositif racloir se compose d'une pièce fabriquée par enlèvement de copeaux, déformation ou fonderie (17) de matériau quelconque.

5. Appareil manuel pour l'élimination mécanique d'algues filaires selon l'une quelconque des revendications précédentes, **caractérisé en ce qu'**une brosse tournée usuelle du commerce (12) est utilisée comme corps d'enroulement.

6. Appareil manuel pour l'élimination mécanique d'algues filaires selon l'une quelconque des revendications 1 à 4, **caractérisé en ce qu'**un corps fabriqué par enlèvement de copeaux, déformation ou fonderie (18) dont les rainures longitudinales permettent au dispositif racloir de prendre prise sous les algues et à la surface duquel des mesures améliorant l'adhésion quelconques, comme une garniture de soie, une garniture de feutre ou autre, sont réalisées, est utilisé comme corps d'enroulement.

7. Appareil manuel pour l'élimination mécanique d'algues filaires selon l'une quelconque des revendications précédentes, **caractérisé en ce qu'**une ou plusieurs lames qui sont protégées par des soies, pointes ou fourchons périphériques, sont en outre utilisées dans le corps d'enroulement de sorte que les algues filaires qui se sont enracinées, qui s'opposent à l'arrachage, peuvent être en outre rasées lors de l'enroulement.

8. Appareil manuel pour l'élimination mécanique d'algues filaires selon l'une quelconque des revendications précédentes, **caractérisé en ce que** l'appareil manuel se compose d'un tube (7) qui peut être saisi aisément des deux mains et est rotatif (9) autour de son axe longitudinal et le raclage peut être réalisé avec un simple mouvement de poussée, vers l'avant et vers l'arrière (8), d'une poignée déplaçable (6) ou d'une enveloppe de poignée.
